# EUROPEAN PATENT APPLICATION

(11) **EP 4 614 223 A2**
(43) Date of publication of application: **10.09.2025**
(21) Application number: 25185285.1
(22) Date of filing: 25.06.2025
(51) Int. Cl.: G02F 1/365

(54) **BROADBAND RADIATION SOURCE**

(71) Applicant: ASML Netherlands B.V., 5500 AH Veldhoven (NL)
(72) Inventor: ROSCAM ABBING, Sylvianne, Dorothea, Christina, 5500 AH Veldhoven (NL); O'DWYER, David, 5500 AH Veldhoven (NL)
(74) Representative: ASML Netherlands B.V.

(57) **Abstract**

The disclosure is related to systems, assemblies, apparatus, and methods relating to a radiation source for generating broadband radiation. The radiation source comprises a photonic crystal surface emitting laser PCSEL configured to output radiation at a first wavelength. The radiation source also comprises a non-linear optical element arranged to receive the radiation output by the PCSEL. The non-linear optical element is configured to convert the first wavelength radiation from the PCSEL into broadband radiation to be output by the radiation source through non-linear effects.

## Description

### FIELD

The present invention relates to radiation sources for generating broadband radiation. Specifically, it relates to a radiation source comprising a photonic crystal surface emitting laser (PCSEL) and a non-linear medium for generating broadband radiation.

### BACKGROUND

A lithographic apparatus is a machine constructed to apply a desired pattern onto a substrate. A lithographic apparatus can be used, for example, in the manufacture of integrated circuits (ICs). A lithographic apparatus may, for example, project a pattern (also often referred to as "design layout" or "design") at a patterning device (e.g., a mask) onto a layer of radiation-sensitive material (resist) provided on a substrate (e.g., a wafer).

To project a pattern on a substrate a lithographic apparatus may use electromagnetic radiation. The wavelength of this radiation determines the minimum size of features which can be formed on the substrate. Typical wavelengths currently in use are 365 nm (i-line), 248 nm, 193 nm and 13.5 nm. A lithographic apparatus, which uses extreme ultraviolet (EUV) radiation, having a wavelength within the range 4-20 nm, for example 6.7 nm or 13.5 nm, may be used to form smaller features on a substrate than a lithographic apparatus which uses, for example, radiation with a wavelength of 193 nm.

Low-k₁ lithography may be used to process features with dimensions smaller than the classical resolution limit of a lithographic apparatus. In such process, the resolution formula may be expressed as CD = k₁×λ/NA, where λ is the wavelength of radiation employed, NA is the numerical aperture of the projection optics in the lithographic apparatus, CD is the "critical dimension" (generally the smallest feature size printed, but in this case half-pitch) and k₁ is an empirical resolution factor. In general, the smaller k₁ the more difficult it becomes to reproduce the pattern on the substrate that resembles the shape and dimensions planned by a circuit designer in order to achieve particular electrical functionality and performance. To overcome these difficulties, sophisticated fine-tuning steps may be applied to the lithographic projection apparatus and/or design layout. These include, for example, but not limited to, optimization of NA, customized illumination schemes, use of phase shifting patterning devices, various optimization of the design layout such as optical proximity correction (OPC, sometimes also referred to as "optical and process correction") in the design layout, or other methods generally defined as "resolution enhancement techniques" (RET). Alternatively, tight control loops for controlling a stability of the lithographic apparatus may be used to improve reproduction of the pattern at low k1.

Lithographically patterned substrates may be measured or inspected using metrology tools or inspection tools. These tools may use radiation to interrogate one or more characteristics of the patterned structure. Different types of radiation may be used to measure different sizes of structures and/or types of characteristics. Examples of characteristics of structures to be determined include alignment, overlay, levelling, dose, and focus. Metrology applications may be used for example for quality control and/or to generate feedback on process steps of semiconductor manufacturing methods, for example to optimize such process steps. Different types of radiation sources, radiation wavelength(s), and radiation beam properties may be used depending on the type of measurement and/or type of structure to be measured. Different types of radiation sources may have different advantages and disadvantages associated with them, such as size, cost, complexity, radiation properties, et cetera. In some instances, broadband radiation may be used in metrology applications. Described herein are systems and methods for generating broadband radiation for metrology applications.

### SUMMARY

According to an aspect of the current disclosure, there is provided a radiation source for generating broadband radiation. The radiation source comprises a photonic crystal surface emitting laser PCSEL configured to output radiation at a first wavelength, and a non-linear optical element arranged to receive the radiation output by the PCSEL, and configured to convert the first wavelength radiation into broadband radiation through non-linear effects.

Optionally, the photonic crystal surface emitting laser PCSEL may be a pulsed photonic crystal surface emitting laser PCSEL configured to output pulsed radiation at the first wavelength.

Optionally, pulses of the pulsed radiation may have a pulse energy of at least 1 µJ.

Optionally, pulses of the pulsed radiation may have a peak power of at least 400 W.

Optionally, the photonic crystal surface emitting laser PCSEL may be a continuous wave emission photonic crystal surface emitting laser PCSEL configured to output pulsed radiation through gated continuous wave pulsed operation.

Optionally, the continuous wave emission photonic crystal surface emitting laser PCSEL may be optically gated to create pulsed radiation.

Optionally, pulses of the pulsed radiation of a gated continuous wave emission photonic crystal surface emitting laser PCSEL may have a pulse length in a range of 1 ns - 50 ns.

Optionally, the photonic crystal surface emitting laser PCSEL may be a Q-switched PCSEL.

Optionally, pulses of the pulsed radiation of a Q-switched photonic crystal surface emitting laser PCSEL may have a pulse length in a range of 10 ps -1 ns.

Optionally, the output radiation from the photonic crystal surface emitting laser PCSEL may have a brightness of at least 1GW/cm²/sr.

Optionally, the photonic crystal surface emitting laser PCSEL may be a GaAs-based PCSEL or an InP-based photonic crystal surface emitting laser PCSEL.

Optionally, the photonic crystal surface emitting laser PCSEL may be positioned in a cavity configured to amplify the peak power of the output radiation at the first wavelength.

Optionally, the non-linear optical element may comprise a photonic crystal fiber.

Optionally, the photonic crystal fiber may be a hollow core fiber.

Optionally, a zero-dispersion wavelength of the photonic crystal fiber may fall within a range of 50nm above or below the first wavelength.

Optionally, the zero-dispersion wavelength of the photonic crystal fiber may match the first wavelength.

Optionally, the non-linear optical element may comprise a solid core photonic crystal fiber. The solid core of the photonic crystal fiber may or may not be doped with a rare earth metal dopant.

Optionally, the rare earth metal dopant may comprise at least one of ytterbium Yb or erbium Er.

Optionally, the first wavelength may be a wavelength in a range of 800 nm - 1700 nm.

Optionally, the broadband radiation may be supercontinuum radiation.

Optionally, the broadband radiation may comprise a plurality of wavelengths in a range of 400 nm to 2000nm, or in a range of 400 nm to 1050 nm.

According to another aspect of the current disclosure there is provided a metrology tool comprising a radiation source as described above.

According to another aspect of the current disclosure there is provided an inspection tool comprising a radiation source as described above.

According to another aspect of the current disclosure there is provided an exposure apparatus comprising a radiation source as described above.

According to another aspect of the current disclosure there is provided a lithographic apparatus comprising a radiation source as described above.

According to another aspect of the current disclosure there is provided a litho cell comprising a tool or apparatus as described above.

### BRIEF DESCRIPTION OF THE DRAWINGS

Embodiments of the invention will now be described, by way of example only, with reference to the accompanying schematic drawings, in which:
- Figure 1 depicts a schematic overview of a lithographic apparatus;
- Figure 2 depicts a schematic overview of a lithographic cell;
- Figure 3 depicts a schematic representation of holistic lithography, representing a cooperation between three key technologies to optimize semiconductor manufacturing;
- Figure 4 depicts a schematic representation of a scatterometer;
- Figure 5(a) is a schematic cross sectional view of a hollow core optical fiber that may form part of a radiation source according to an embodiment in a transverse plane (i.e. perpendicular to an axis of the optical fiber);
- Figure 5(b) depicts a schematic representation of a radiation source according to an embodiment for providing broadband output radiation; and
- Figures 5(c)(a) and 5(c)(b) schematically depict the transverse cross-sections of examples of hollow core photonic crystal fiber (HC-PCF) designs for supercontinuum generation;
- Figure 6 depicts a schematic representation of a radiation source using a PCSEL and a non-linear medium for broadband radiation generation;
- Figure 7 depicts a flow chart with steps in a method for broadband radiation generation using a PCSEL; and
- Figure 8 depicts a flow chart with steps in a method for broadband radiation generation using an array of PCSELs.

### DETAILED DESCRIPTION

In the present document, the terms "radiation" and "beam" are used to encompass all types of electromagnetic radiation, including ultraviolet radiation (e.g. with a wavelength of 365, 248, 193, 157 or 126 nm) and EUV (extreme ultra-violet radiation, e.g. having a wavelength in the range of about 5-100 nm).

The term "reticle", "mask" or "patterning device" as employed in this text may be broadly interpreted as referring to a generic patterning device that can be used to endow an incoming radiation beam with a patterned cross-section, corresponding to a pattern that is to be created in a target portion of the substrate. The term "light valve" can also be used in this context. Besides the classic mask (transmissive or reflective, binary, phase-shifting, hybrid, etc.), examples of other such patterning devices include a programmable mirror array and a programmable LCD array.

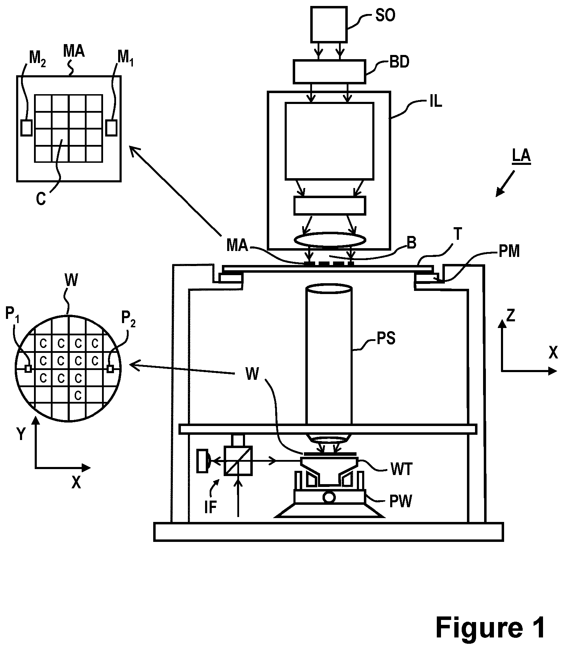

Figure 1 schematically depicts a lithographic apparatus LA. The lithographic apparatus LA includes an illumination system (also referred to as illuminator) IL configured to condition a radiation beam B (e.g., UV radiation, DUV radiation or EUV radiation), a mask support (e.g., a mask table) MT constructed to support a patterning device (e.g., a mask) MA and connected to a first positioner PM configured to accurately position the patterning device MA in accordance with certain parameters, a substrate support (e.g., a wafer table) WT constructed to hold a substrate (e.g., a resist coated wafer) W and connected to a second positioner PW configured to accurately position the substrate support in accordance with certain parameters, and a projection system (e.g., a refractive projection lens system) PS configured to project a pattern imparted to the radiation beam B by patterning device MA onto a target portion C (e.g., comprising one or more dies) of the substrate W.

In operation, the illumination system IL receives a radiation beam from a radiation source SO, e.g. via a beam delivery system BD. The illumination system IL may include various types of optical components, such as refractive, reflective, magnetic, electromagnetic, electrostatic, and/or other types of optical components, or any combination thereof, for directing, shaping, and/or controlling radiation. The illuminator IL may be used to condition the radiation beam B to have a desired spatial and angular intensity distribution in its cross section at a plane of the patterning device MA.

The term "projection system" PS used herein should be broadly interpreted as encompassing various types of projection system, including refractive, reflective, catadioptric, anamorphic, magnetic, electromagnetic and/or electrostatic optical systems, or any combination thereof, as appropriate for the exposure radiation being used, and/or for other factors such as the use of an immersion liquid or the use of a vacuum. Any use of the term "projection lens" herein may be considered as synonymous with the more general term "projection system" PS.

The lithographic apparatus LA may be of a type wherein at least a portion of the substrate may be covered by a liquid having a relatively high refractive index, e.g., water, so as to fill a space between the projection system PS and the substrate W - which is also referred to as immersion lithography. More information on immersion techniques is given in US6952253, which is incorporated herein by reference.

The lithographic apparatus LA may also be of a type having two or more substrate supports WT (also named "dual stage"). In such "multiple stage" machine, the substrate supports WT may be used in parallel, and/or steps in preparation of a subsequent exposure of the substrate W may be carried out on the substrate W located on one of the substrate support WT while another substrate W on the other substrate support WT is being used for exposing a pattern on the other substrate W.

In addition to the substrate support WT, the lithographic apparatus LA may comprise a measurement stage. The measurement stage is arranged to hold a sensor and/or a cleaning device. The sensor may be arranged to measure a property of the projection system PS or a property of the radiation beam B. The measurement stage may hold multiple sensors. The cleaning device may be arranged to clean part of the lithographic apparatus, for example a part of the projection system PS or a part of a system that provides the immersion liquid. The measurement stage may move beneath the projection system PS when the substrate support WT is away from the projection system PS.

In operation, the radiation beam B is incident on the patterning device, e.g. mask, MA which is held on the mask support MT, and is patterned by the pattern (design layout) present on patterning device MA. Having traversed the mask MA, the radiation beam B passes through the projection system PS, which focuses the beam onto a target portion C of the substrate W. With the aid of the second positioner PW and a position measurement system IF, the substrate support WT can be moved accurately, e.g., so as to position different target portions C in the path of the radiation beam B at a focused and aligned position. Similarly, the first positioner PM and possibly another position sensor (which is not explicitly depicted in Figure 1) may be used to accurately position the patterning device MA with respect to the path of the radiation beam B. Patterning device MA and substrate W may be aligned using mask alignment marks M1, M2 and substrate alignment marks P1, P2. Although the substrate alignment marks P1, P2 as illustrated occupy dedicated target portions, they may be located in spaces between target portions. Substrate alignment marks P1, P2 are known as scribe-lane alignment marks when these are located between the target portions C.

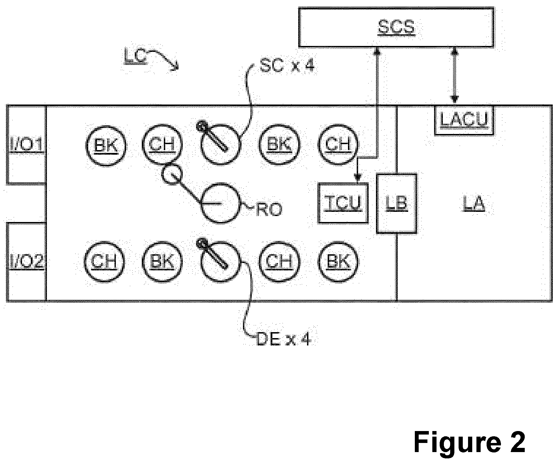

As shown in Figure 2 the lithographic apparatus LA may form part of a lithographic cell LC, also sometimes referred to as a lithocell or (litho)cluster, which often also includes apparatus to perform pre- and post-exposure processes on a substrate W. Conventionally these include spin coaters SC to deposit resist layers, developers DE to develop exposed resist, chill plates CH and bake plates BK, e.g. for conditioning the temperature of substrates W e.g. for conditioning solvents in the resist layers. A substrate handler, or robot, RO picks up substrates W from input/output ports I/O1, I/O2, moves them between the different process apparatus and delivers the substrates W to the loading bay LB of the lithographic apparatus LA. The devices in the lithocell, which are often also collectively referred to as the track, are typically under the control of a track control unit TCU that in itself may be controlled by a supervisory control system SCS, which may also control the lithographic apparatus LA, e.g. via lithography control unit LACU.

In order for the substrates W exposed by the lithographic apparatus LA to be exposed correctly and consistently, it is desirable to inspect substrates to measure properties of patterned structures, such as overlay errors between subsequent layers, line thicknesses, critical dimensions (CD), etc. For this purpose, inspection tools (not shown) may be included in the lithocell LC. If errors are detected, adjustments, for example, may be made to exposures of subsequent substrates or to other processing steps that are to be performed on the substrates W, especially if the inspection is done before other substrates W of the same batch or lot are still to be exposed or processed.

An inspection apparatus, which may also be referred to as a metrology apparatus, is used to determine properties of the substrates W, and in particular, how properties of different substrates W vary or how properties associated with different layers of the same substrate W vary from layer to layer. The inspection apparatus may alternatively be constructed to identify defects on the substrate W and may, for example, be part of the lithocell LC, or may be integrated into the lithographic apparatus LA, or may even be a stand-alone device. The inspection apparatus may measure the properties on a latent image (image in a resist layer after the exposure), or on a semi-latent image (image in a resist layer after a post-exposure bake step PEB), or on a developed resist image (in which the exposed or unexposed parts of the resist have been removed), or even on an etched image (after a pattern transfer step such as etching).

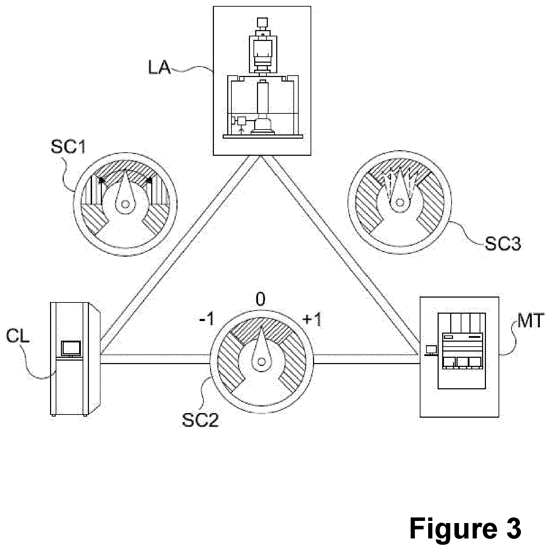

Typically the patterning process in a lithographic apparatus LA is one of the most critical steps in the processing which requires high accuracy of dimensioning and placement of structures on the substrate W. To ensure this high accuracy, three systems may be combined in a so called "holistic" control environment as schematically depicted in Fig. 3. One of these systems is the lithographic apparatus LA which is (virtually) connected to a metrology tool MT (a second system) and to a computer system CL (a third system). The key of such "holistic" environment is to optimize the cooperation between these three systems to enhance the overall process window and provide tight control loops to ensure that the patterning performed by the lithographic apparatus LA stays within a process window. The process window defines a range of process parameters (e.g. dose, focus, overlay) within which a specific manufacturing process yields a defined result (e.g. a functional semiconductor device) - typically within which the process parameters in the lithographic process or patterning process are allowed to vary.

The computer system CL may use (part of) the design layout to be patterned to predict which resolution enhancement techniques to use and to perform computational lithography simulations and calculations to determine which mask layout and lithographic apparatus settings achieve the largest overall process window of the patterning process (depicted in Fig. 3 by the double arrow in the first scale SC1). Typically, the resolution enhancement techniques are arranged to match the patterning possibilities of the lithographic apparatus LA. The computer system CL may also be used to detect where within the process window the lithographic apparatus LA is currently operating (e.g. using input from the metrology tool MT) to predict whether defects may be present due to e.g. sub-optimal processing (depicted in Fig. 3 by the arrow pointing "0" in the second scale SC2).

The metrology tool MT may provide input to the computer system CL to enable accurate simulations and predictions, and may provide feedback to the lithographic apparatus LA to identify possible drifts, e.g. in a calibration status of the lithographic apparatus LA (depicted in Fig. 3 by the multiple arrows in the third scale SC3).

In lithographic processes, it is desirable to make frequently measurements of the structures created, e.g., for process control and verification. Tools to make such measurement are typically called metrology tools MT. Different types of metrology tools MT for making such measurements are known, including scanning electron microscopes or various forms of scatterometer metrology tools MT. Scatterometers are versatile instruments which allow measurements of the parameters of a lithographic process by having a sensor in the pupil or a conjugate plane with the pupil of the objective of the scatterometer, measurements usually referred as pupil based measurements, or by having the sensor in the image plane or a plane conjugate with the image plane, in which case the measurements are usually referred as image or field based measurements. Such scatterometers and the associated measurement techniques are further described in patent applications US20100328655, US2011102753A1, US20120044470A, US20110249244, US20110026032 or EP1,628,164A, incorporated herein by reference in their entirety. Aforementioned scatterometers may measure gratings using light from soft x-ray and visible to near-IR wavelength range.

In a first embodiment, the scatterometer MT is an angular resolved scatterometer. In such a scatterometer reconstruction methods may be applied to the measured signal to reconstruct or calculate properties of the grating. Such reconstruction may, for example, result from simulating interaction of scattered radiation with a mathematical model of the target structure and comparing the simulation results with those of a measurement. Parameters of the mathematical model are adjusted until the simulated interaction produces a diffraction pattern similar to that observed from the real target.

In a second embodiment, the scatterometer MT is a spectroscopic scatterometer MT. In such spectroscopic scatterometer MT, the radiation emitted by a radiation source is directed onto the target and the reflected or scattered radiation from the target is directed to a spectrometer detector, which measures a spectrum (i.e. a measurement of intensity as a function of wavelength) of the specular reflected radiation. From this data, the structure or profile of the target giving rise to the detected spectrum may be reconstructed, e.g. by Rigorous Coupled Wave Analysis and non-linear regression or by comparison with a library of simulated spectra.

In a third embodiment, the scatterometer MT is a ellipsometric scatterometer. The ellipsometric scatterometer allows for determining parameters of a lithographic process by measuring scattered radiation for each polarization states. Such metrology apparatus emits polarized light (such as linear, circular, or elliptic) by using, for example, appropriate polarization filters in the illumination section of the metrology apparatus. A source suitable for the metrology apparatus may provide polarized radiation as well. Various embodiments of existing ellipsometric scatterometers are described in US patent applications 11/451,599, 11/708,678, 12/256,780, 12/486,449, 12/920,968, 12/922,587, 13/000,229, 13/033,135, 13/533,110 and 13/891,410 incorporated herein by reference in their entirety.

In one embodiment of the scatterometer MT, the scatterometer MT is adapted to measure the overlay of two misaligned gratings or periodic structures by measuring asymmetry in the reflected spectrum and/or the detection configuration, the asymmetry being related to the extent of the overlay. The two (typically overlapping) grating structures may be applied in two different layers (not necessarily consecutive layers), and may be formed substantially at the same position on the wafer. The scatterometer may have a symmetrical detection configuration as described e.g. in co-owned patent application EP1,628,164A, such that any asymmetry is clearly distinguishable. This provides a straightforward way to measure misalignment in gratings. Further examples for measuring overlay error between the two layers containing periodic structures as target is measured through asymmetry of the periodic structures may be found in PCT patent application publication no. WO 2011/012624 or US patent application US 20160161863, incorporated herein by reference in its entirety.

Other parameters of interest may be focus and dose. Focus and dose may be determined simultaneously by scatterometry (or alternatively by scanning electron microscopy) as described in US patent application US2011-0249244, incorporated herein by reference in its entirety. A single structure may be used which has a unique combination of critical dimension and sidewall angle measurements for each point in a focus energy matrix (FEM - also referred to as Focus Exposure Matrix). If these unique combinations of critical dimension and sidewall angle are available, the focus and dose values may be uniquely determined from these measurements.

A metrology target may be an ensemble of composite gratings, formed by a lithographic process, mostly in resist, but also after etch process for example. Typically the pitch and line-width of the structures in the gratings strongly depend on the measurement optics (in particular the NA of the optics) to be able to capture diffraction orders coming from the metrology targets. As indicated earlier, the diffracted signal may be used to determine shifts between two layers (also referred to 'overlay') or may be used to reconstruct at least part of the original grating as produced by the lithographic process. This reconstruction may be used to provide guidance of the quality of the lithographic process and may be used to control at least part of the lithographic process. Targets may have smaller sub-segmentation which are configured to mimic dimensions of the functional part of the design layout in a target. Due to this sub-segmentation, the targets will behave more similar to the functional part of the design layout such that the overall process parameter measurements resembles the functional part of the design layout better. The targets may be measured in an underfilled mode or in an overfilled mode. In the underfilled mode, the measurement beam generates a spot that is smaller than the overall target. In the overfilled mode, the measurement beam generates a spot that is larger than the overall target. In such overfilled mode, it may also be possible to measure different targets simultaneously, thus determining different processing parameters at the same time.

Overall measurement quality of a lithographic parameter using a specific target is at least partially determined by the measurement recipe used to measure this lithographic parameter. The term "substrate measurement recipe" may include one or more parameters of the measurement itself, one or more parameters of the one or more patterns measured, or both. For example, if the measurement used in a substrate measurement recipe is a diffraction-based optical measurement, one or more of the parameters of the measurement may include the wavelength of the radiation, the polarization of the radiation, the incident angle of radiation relative to the substrate, the orientation of radiation relative to a pattern on the substrate, etc. One of the criteria to select a measurement recipe may, for example, be a sensitivity of one of the measurement parameters to processing variations. More examples are described in US patent application US2016-0161863 and published US patent application US 2016/0370717A1incorporated herein by reference in its entirety.

In lithographic processes, it is desirable to make frequently measurements of the structures created, e.g., for process control and verification. Various tools for making such measurements are known, including scanning electron microscopes or various forms of metrology apparatuses, such as scatterometers. Examples of known scatterometers often rely on provision of dedicated metrology targets, such as underfilled targets (a target, in the form of a simple grating or overlapping gratings in different layers, that is large enough that a measurement beam generates a spot that is smaller than the grating) or overfilled targets (whereby the illumination spot partially or completely contains the target). Further, the use of metrology tools, for example an angular resolved scatterometter illuminating an underfilled target, such as a grating, allows the use of so-called reconstruction methods where the properties of the grating can be calculated by simulating interaction of scattered radiation with a mathematical model of the target structure and comparing the simulation results with those of a measurement. Parameters of the model are adjusted until the simulated interaction produces a diffraction pattern similar to that observed from the real target.

Scatterometers are versatile instruments which allow measurements of the parameters of a lithographic process by having a sensor in the pupil or a conjugate plane with the pupil of the objective of the scatterometer, measurements usually referred as pupil based measurements, or by having the sensor in the image plane or a plane conjugate with the image plane, in which case the measurements are usually referred as image or field based measurements. Such scatterometers and the associated measurement techniques are further described in patent applications US20100328655, US2011102753A1, US20120044470A, US20110249244, US20110026032 or EP1,628,164A, incorporated herein by reference in their entirety. Aforementioned scatterometers can measure in one image multiple targets from from multiple gratings using light from soft x-ray and visible to near-IR wave range.

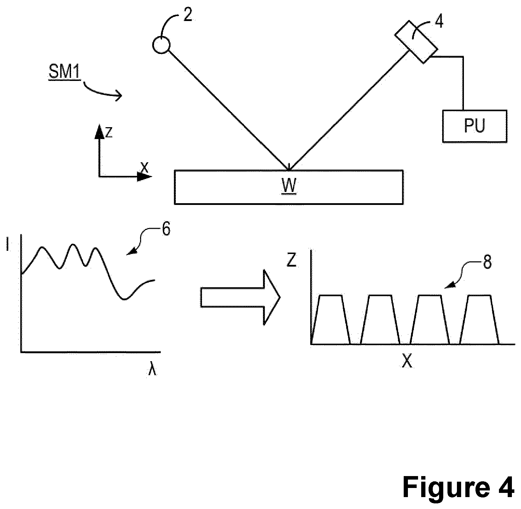

A metrology apparatus, such as a scatterometer, is depicted in figure 4. It comprises a broadband (white light) radiation projector 2 which projects radiation onto a substrate W. The reflected or scattered radiation is passed to a spectrometer detector 4, which measures a spectrum 6 (i.e. a measurement of intensity as a function of wavelength) of the specular reflected radiation. From this data, the structure or profile giving rise to the detected spectrum may be reconstructed by processing unit PU, e.g. by Rigorous Coupled Wave Analysis and non-linear regression or by comparison with a library of simulated spectra as shown at the bottom of Figure 3. In general, for the reconstruction, the general form of the structure is known and some parameters are assumed from knowledge of the process by which the structure was made, leaving only a few parameters of the structure to be determined from the scatterometry data. Such a scatterometer may be configured as a normal-incidence scatterometer or an oblique-incidence scatterometer.

Metrology tools MT, such as a scatterometer, topography measurement system, or position measurement system mentioned above may use radiation originating from a radiation source to perform a measurement. The properties of the radiation used by a metrology tool may affect the type and quality of measurements that may be performed. For some applications, it may be advantageous to use multiple radiation frequencies to measure a substrate, for example broadband radiation may be used. Multiple different frequencies may be able to propagate, irradiate, and scatter off a metrology target with no or minimal interference with other frequencies. Therefore different frequencies may for example be used to obtain more metrology data simultaneously. Different radiation frequencies may also be able to interrogate and discover different properties of a metrology target. Broadband radiation may be useful in metrology systems MT such as for example level sensors, alignment mark measurement systems, scatterometry tools, or inspection tools. A broadband radiation source may be a supercontinuum source.

High quality broadband radiation, for example supercontinuum radiation, may be difficult to generate. One method for generating broadband radiation may be to broaden high-power narrow band or single frequency input radiation, for example making use of non-linear, higher order effects. The input radiation (which may be produced using a laser) may be referred to as pump radiation. Alternatively, the input radiation may be referred to as seed radiation. To obtain high power radiation for broadening effects, radiation may be confined into a small area so that strongly localised high intensity radiation is achieved. In those areas, the radiation may interact with broadening structures and/or materials forming a non-linear medium so as to create broadband output radiation. In the high intensity radiation areas, different materials and/or structures may be used to enable and/or improve radiation broadening by providing a suitable non-linear medium.

In some implementations, the broadband output radiation is created in a photonic crystal fiber. (PCF). In several embodiments, such a photonic crystal fiber has microstructures around its fiber core assisting in confining radiation that travels through the fiber in the fiber core. The fiber core can be made of a solid material that has non-linear properties and that is capable of generating broadband radiation when high intensity pump radiation is transmitted through the fiber core. Although it is feasible to generate broadband radiation in solid core photonic crystal fibers, there may be a few disadvantages of using a solid material. For example, if UV radiation is generated in the solid core, this radiation might not be present in the output spectrum of the fiber because the radiation is absorbed by most solid material.

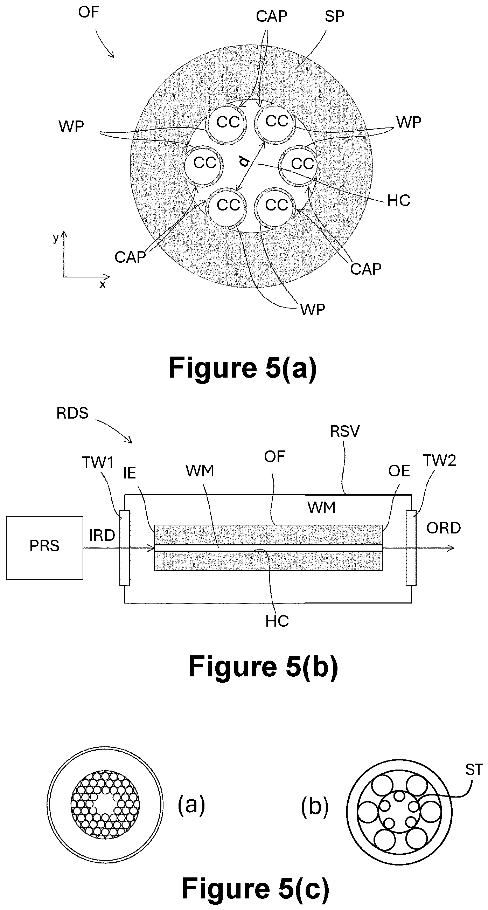

In some implementations, as discussed further below with reference to Figure 5(a), methods and apparatus for broadening input radiation may use a fiber for confining input radiation, and for broadening the input radiation to output broadband radiation. The fiber may be a hollow core fiber, and may comprise internal structures to achieve effective guiding and confinement of radiation in the fiber. The fiber may be a hollow core photonic crystal fiber (HC-PCF), which is particularly suitable for strong radiation confinement, predominantly inside the hollow core of the fiber, achieving high radiation intensities. The hollow core of the fiber may be filled with a gas acting as a broadening medium for broadening input radiation. Such a fiber and gas arrangement may be used to create a supercontinuum radiation source. Radiation input to the fiber may be electromagnetic radiation, for example radiation in one or more of the infrared, visible, UV, and extreme UV spectra. The output radiation may consist of or comprise broadband radiation, which may be referred to herein as white light.

Some embodiments relate to a new design of such a broadband radiation source comprising an optical fiber. The optical fiber is a hollow-core, photonic crystal fiber (HC-PCF). In particular, the optical fiber may be a hollow-core, photonic crystal fiber of a type comprising anti-resonant structures for confinement of radiation. Such fibers comprising anti-resonant structures are known in the art as anti-resonant fibers, tubular fibers, single-ring fibers, negative curvature fibers or inhibited coupling fibers. Various different designs of such fibers are known in the art. Alternatively, the optical fiber may be photonic bandgap fibers (HC-PBFs, for example a Kagome fiber).

A number of types of HC-PCFs can be engineered, each based on a different physical guidance mechanism. Two such HC-PCFs include: hollow-core photonic bandgap fibers (HC-PBFs) and hollow-core anti-resonant reflecting fibers (HC-ARFs). Detail on the design and manufacture of HC-PCFs can be found in US patent US2004/015085A1 (for HC-PBFs) and International PCT patent application WO2017/032454A1 (for Hollow Core anti-resonant reflecting fibers), which are incorporated herein by reference. Figure 5(c)(a) shows a Kagome fiber, comprising a Kagome lattice structure.

An example of an optical fiber for use in the radiation source is now described with reference to Figure 5(a), which is a schematic cross sectional view of the optical fiber OF in a transverse plane. Further embodiments similar to the practical example of the fiber of Figure 5(a) are disclosed in WO2017/032454A1.

The optical fiber OF comprises an elongate body, which is longer in one dimension compared to the other two dimensions of the fiber OF. This longer dimension may be referred to as an axial direction and may define an axis of the optical fiber OF. The two other dimensions define a plane which may be referred to as a transverse plane. Figure 5(a) shows a cross-section of the optical fiber OF in this transverse plane (i.e. perpendicular to the axis), which is labelled as the x-y plane. The transverse cross-section of the optical fiber OF may be substantially constant along the fiber axis.

It will be appreciated that the optical fiber OF has some degree of flexibility and therefore the direction of the axis will not, in general, be uniform along the length of the optical fiber OF. The terms such as the optical axis, the transverse cross-section and the like will be understood to mean the local optical axis, the local transverse cross-section and so on. Furthermore, where components are described as being cylindrical or tubular these terms will be understood to encompass such shapes that may have been distorted as the optical fiber OF is flexed.

The optical fiber OF may have any length and it will be appreciated that the length of the optical fiber OF may be dependent on the application. The optical fiber OF may have a length between 1 cm and 10 m, for example, the optical fiber OF may have a length between 10 cm and 100 cm.

The optical fiber OF comprises: a hollow core COR; a cladding portion surrounding the hollow core COR; and a support portion SP surrounding and supporting the cladding portion. The optical fiber OF may be considered to comprise a body (comprising the cladding portion and the support portion SP) having a hollow core COR. The cladding portion comprises a plurality of anti-resonance elements for guiding radiation through the hollow core COR. In particular, the plurality of anti-resonance elements are arranged to confine radiation that propagates through the optical fiber OF predominantly inside the hollow core HC and to guide the radiation along the optical fiber OF. The hollow core HC of the optical fiber OF may be disposed substantially in a central region of the optical fiber OF, so that the axis of the optical fiber OF may also define an axis of the hollow core HC of the optical fiber OF.

The cladding portion comprises a plurality of anti-resonance elements for guiding radiation propagating through the optical fiber OF. In particular, in this embodiment, the cladding portion comprises a single ring of six tubular capillaries CAP. Each of the tubular capillaries CAP acts as an anti-resonance element.

The capillaries CAP may also be referred to as tubes. The capillaries CAP may be circular in cross section, or may have another shape. Each capillary CAP comprises a generally cylindrical wall portion WP that at least partially defines the hollow core HC of the optical fiber OF and separates the hollow core HC from a capillary cavity CC. It will be appreciated that the wall portion WP may act as an anti-reflecting Fabry-Perot resonator for radiation that propagates through the hollow core HC (and which may be incident on the wall portion WP at a grazing incidence angle). The thickness of the wall portion WP may be suitable so as to ensure that reflection back into the hollow core HC is generally enhanced whereas transmission into the capillary cavity CC is generally supressed. In some embodiments, the capillary wall portion WP may have a thickness between 0.01 - 10.0 µm.

It will be appreciated that, as used herein, the term cladding portion is intended to mean a portion of the optical fiber OF for guiding radiation propagating through the optical fiber OF (i.e. the capillaries CAP which confine said radiation within the hollow core COR). The radiation may be confined in the form of transverse modes, propagating along the fiber axis.

The support portion is generally tubular and supports the six capillaries CAP of the cladding portion. The six capillaries CAP are distributed evenly around an inner surface if the inner support portion SP. The six capillaries CAP may be described as being disposed in a generally hexagonal formation.

The capillaries CAP are arranged so that each capillary is not in contact with any of the other capillaries CAP. Each of the capillaries CAP is in contact with the inner support portion SP and spaced apart from adjacent capillaries CAP in the ring structure. Such an arrangement may be beneficial since it may increase a transmission bandwidth of the optical fiber OF (relative, for example, to an arrangement wherein the capillaries are in contact with each other). Alternatively, in some embodiments, each of the capillaries CAP may be in contact with adjacent capillaries CAP in the ring structure.

The six capillaries CAP of the cladding portion are disposed in a ring structure around the hollow core COR. An inner surface of the ring structure of capillaries CAP at least partially defines the hollow core HC of the optical fiber OF. The diameter d of the hollow core HC (which may be defined as the smallest dimension between opposed capillaries, indicated by arrow d) may be between 10 and 1000 µm. The diameter d of the hollow core HC may affect the mode field diameter, impact loss, dispersion, modal plurality, and non-linearity properties of the hollow core optical fiber OF.

In this embodiment, the cladding portion comprises a single ring arrangement of capillaries CAP (which act as anti-resonance elements). Therefore, a line in any radial direction from a center of the hollow core HC to an exterior of the optical fiber OF passes through no more than one capillary CAP.

It will be appreciated that other embodiments may be provided with different arrangements of anti-resonance elements. These may include arrangements having multiple rings of anti-resonance elements and arrangements having nested anti-resonance elements. Furthermore, although the embodiment shown in Figure 5(a) comprises a ring of six capillaries, in other embodiments, one or more rings comprising any number of anti-resonance elements (for example 4, 5, 6, 7, 8, 9, 10, 11 or 12 capillaries) may be provided in the cladding portion.

Figure 5(c)(b) shows a modified embodiment of the above discussed HC-PCFs with a single ring of tubular capillaries. In the example of Figure 5(c)(b) there are two coaxial rings of tubular capillaries 21. For holding the inner and outer rings of tubular capillaries 21, a support tube ST may be included in the HC-PCF. The support tube may be made of silica.

The tubular capillaries of the examples of Figure 5(a) and Figures 5(c)(a) and 5(c)(b) may have a circular cross-sectional shape. Other shapes are also possible for the tubular capillaries, like elliptical or polygonal cross-sections. Additionally, the solid material of the tubular capillaries of the examples of Figure 5(a) and Figures 5(c)(a) and 5(c)(b) may comprise plastic material, like PMA, glass, like silica, or soft glass.

Figure 5(b) depicts a radiation source RDS for providing broadband output radiation. The radiation source RDS comprises a pulsed pump radiation source PRS or any other type of source that is capable of generating short pulses of a desired length and energy level; an optical fiber OF (for example of the type shown in Figure 5(a)) with a hollow core COR; and a working medium WM (for example a gas) disposed within the hollow core COR. Although in Figure 5(b) the radiation source RDS comprises the optical fiber OF shown in Figure 5(a), in alternative embodiments other types of hollow core optical fiber may be used.

The pulsed pump radiation source PRS is configured to provide input radiation IRD. The hollow core HC of the optical fiber OF is arranged to receive the input radiation IRD from the pulsed pump radiation source PRS, and broaden it to provide output radiation ORD. The working medium WM enables the broadening of the frequency range of the received input radiation IRD so as to provide broadband output radiation ORD.

The radiation source RDS further comprises a reservoir RSV. The optical fiber OF is disposed inside the reservoir RSV. The reservoir RSV may also be referred to as a housing, container or gas cell. The reservoir RSV is configured to contain the working medium WM. The reservoir RSV may comprise one or more features, known in the art, for controlling, regulating, and/or monitoring the composition of the working medium WM (which may be a gas) inside the reservoir RSV. The reservoir RSV may comprise a first transparent window TW1. In use, the optical fiber OF is disposed inside the reservoir RSV such that the first transparent window TW1 is located proximate to an input end IE of the optical fiber OF. The first transparent window TW1 may form part of a wall of the reservoir RSV. The first transparent window TW1 may be transparent for at least the received input radiation frequencies, so that received input radiation IRD (or at least a large portion thereof) may be coupled into the optical fiber OF located inside reservoir RSV. It will be appreciated that optics (not shown) may be provided for coupling the input radiation IRD into the optical fiber OF.

The reservoir RSV comprises a second transparent window TW2, forming part of a wall of the reservoir RSV. In use, when the optical fiber OF is disposed inside the reservoir RSV, the second transparent window TW2 is located proximate to an output end OE of the optical fiber OF. The second transparent window TW2 may be transparent for at least the frequencies of the broadband output radiation ORD of the radiation source RDS.

Alternatively, in another embodiment, the two opposed ends of the optical fiber OF may be placed inside different reservoirs. The optical fiber OF may comprise a first end section configured to receive input radiation IRD, and a second end section for outputting broadband output radiation ORD. The first end section may be placed inside a first reservoir, comprising a working medium WM. The second end section may be placed inside a second reservoir, wherein the second reservoir may also comprise a working medium WM. The functioning of the reservoirs may be as described in relation to Figure 5(b) above. The first reservoir may comprise a first transparent window, configured to be transparent for input radiation IRD. The second reservoir may comprise a second transparent window configured to be transparent for broadband output broadband radiation ORD. The first and second reservoirs may also comprise a sealable opening to permit the optical fiber OF to be placed partially inside and partially outside the reservoir, so that a gas can be sealed inside the reservoir. The optical fiber OF may further comprise a middle section not contained inside a reservoir. Such an arrangement using two separate gas reservoirs may be particularly convenient for embodiments wherein the optical fiber OF is relatively long (for example when the length is more than 1 m). It will be appreciated that for such arrangements which use two separate gas reservoirs, the two reservoirs (which may comprise one or more features, known in the art, for controlling, regulating, and/or monitoring the composition of a gas inside the two reservoirs) may be considered to provide an apparatus for providing the working medium WM within the hollow core HC of the optical fiber OF.

In this context a window may be transparent for a frequency if at least 50%, 75%, 85%, 90%, 95%, or 99% of incident radiation of that frequency on the window is transmitted through the window.

Both the first TW1 and the second TW2 transparent windows may form an airtight seal within the walls of the reservoir RSV so that the working medium WM (which may be a gas) may be contained within the reservoir RSV. It will be appreciated that the gas WM may be contained within the reservoir RSV at a pressure different to the ambient pressure of the reservoir RSV.

The working medium WM may comprise a noble gas such as Argon, Krypton, and Xenon, a Raman active gas such as Hydrogen, Deuterium and Nitrogen, or a gas mixture such as an Argon/Hydrogen mixture, a Xenon/Deuterium mixture, a Krypton/Nitrogen mixture, or a Nitrogen/Hydrogen mixture. Depending on the type of filling gas, the nonlinear optical processes can include modulation instability (MI), soliton self-compression, soliton fission, Kerr effect, Raman effect and dispersive wave generation, details of which are described in WO2018/127266A1 and US9160137B1 (both of which are hereby incorporated by reference). Since the dispersion of the filling gas can be tuned by varying the working medium WM pressure in the reservoir RSR (i.e. gas cell pressure), the generated broadband pulse dynamics and the associated spectral broadening characteristics can be adjusted so as to optimize the frequency conversion

In one implementation, the working medium WM may be disposed within the hollow core HC at least during receipt of input radiation IRD for producing broadband output radiation ORD. It will be appreciated that, while the optical fiber OF is not receiving input radiation IRD for producing broadband output radiation, the gas WM may be wholly or partially absent from the hollow core COR.

In order to achieve frequency broadening high intensity radiation may be desirable. An advantage of having a hollow core optical fiber OF is that it may achieve high intensity radiation through strong spatial confinement of radiation propagating through the optical fiber OF, achieving high localised radiation intensities. The radiation intensity inside the optical fiber OF may be high, for example due to high received input radiation intensity and/or due to strong spatial confinement of the radiation inside the optical fiber OF. An advantage of hollow core optical fibers is that they can guide radiation having a broader wavelength range that solid-core fibers and, in particular, hollow core optical fibers can guide radiation in both the ultraviolet and infrared ranges.

An advantage of using a hollow core optical fiber OF may be that the majority of the radiation guided inside the optical fiber OF is confined to the hollow core COR. Therefore, the majority of the interaction of the radiation inside the optical fiber OF is with the working medium WM, which is provided inside the hollow core HC of the optical fiber OF. As a result, the broadening effects of the working medium WM on the radiation may be increased.

The received input radiation IRD may be electromagnetic radiation. The input radiation IRD may be received as pulsed radiation. For example, the input radiation IRD may comprise ultrafast pulses, for example, generated by a laser.

The input radiation IRD may be coherent radiation. The input radiation IRD may be collimated radiation, an advantage of which may be to facilitate and improve the efficiency of coupling the input radiation IRD into the optical fiber OF. The input radiation IRD may comprise a single frequency, or a narrow range of frequencies. The input radiation IRD may be generated by a laser. Similarly, the output radiation ORD may be collimated and/or may be coherent.

The broadband range of the output radiation ORD may be a continuous range, comprising a continuous range of radiation frequencies. The output radiation ORD may comprise supercontinuum radiation. Continuous radiation may be beneficial for use in a number of applications, for example in metrology applications. For example, the continuous range of frequencies may be used to interrogate a large number of properties. The continuous range of frequencies may for example be used to determine and/or eliminate a frequency dependency of a measured property. Supercontinuum output radiation ORD may comprise for example electromagnetic radiation over a wavelength range of 100 nm - 4000 nm. The broadband output radiation ORD frequency range may be for example 400 nm - 900 nm, 500 nm - 900 nm, or 200 nm - 2000 nm. The supercontinuum output radiation ORD may comprise white light.

The input radiation IRD provided by the pulsed pump radiation source PRS may be pulsed. The input radiation IRD may comprise electromagnetic radiation of one or more frequencies between 200 nm and 2 µm. The input radiation IRD may for example comprise electromagnetic radiation with a wavelength of 1.03 µm. The repetition rate of the pulsed radiation IRD may be of an order of magnitude of 1 kHz to 100 MHz. The pulse energies may have an order of magnitude of 0.1 µJ to 100 µJ, for example 1 - 10 µJ. A pulse duration for the input radiation IRD may be between 10 fs and 10 ps, for example 300 fs. The average power of input radiation IRD may be between 100 mW to several 100 W. The average power of input radiation IRD may for example be 20 - 50 W.

The pulsed pump radiation source PRS may be a laser. The spatio-temporal transmission characteristics of such a laser pulse, e.g. its spectral amplitude and phase, transmitted along the optical fiber OF can be varied and tuned through adjustment of (pump) laser parameters, working component WM variations, and optical fiber OF parameters. Said spatio-temporal transmission characteristics may include one or more of: output power, output mode profile, output temporal profile, width of the output temporal profile (or output pulse width), output spectral profile, and bandwidth of the output spectral profile (or output spectral bandwidth). Said pulse pump radiation source PRS parameters may include one or more of: pump wavelength, pump pulse energy, pump pulse width, pump pulse repetition rate. Said optical fiber OF parameters may include one or more of: optical fiber length, size and shape of the hollow core 101, size and shape of the capillaries, thickness of the walls of the capillaries surrounding the hollow core. Said working component WM, e.g. filling gas, parameters may include one or more of: gas type, gas pressure and gas temperature.

The broadband output radiation ORD provided by the radiation source RDS may have an average output power of at least 1 W. The average output power may be at least 5 W. The average output power may be at least 10 W. The broadband output radiation ORD may be pulsed broadband output radiation ORD. The broadband output radiation ORD may have a power spectral density in the entire wavelength band of the output radiation of at least 0.01 mW/nm. The power spectral density in the entire wavelength band of the broadband output radiation may be at least 3 mW/nm.

Metrology tools may use radiation to perform measurements and obtain information about a structure on a substrate. Different radiation properties may be used to interrogate different types of characteristics of structures. Radiation properties that may be varied include wavelength(s), wavelength range (e.g. broadband or narrowband radiation), peak and/or average power, radiation beam shape, etc. There are several strategies for generating a range of wavelengths to be used in optical metrology applications. One type of radiation used for measuring characteristics of structures on substrates is broadband radiation. An example type of broadband radiation is supercontinuum radiation. Supercontinuum radiation may be broadband continuous spectrum radiation. A supercontinuum radiation source may have a pulsed pump laser source (e.g. such as reference PRS described in relation to figure 5 above) which may be configured to provide radiation pulses with high peak intensity in a non-linear medium to generate broadband spectrum radiation.

An advantage of using a supercontinuum radiation source may be that the same source can be used in combination with colour filters (e.g. wavelength bandpass filters with various different bandwidths and central wavelengths), to select one or more wavelengths of choice from the broadband radiation spectrum. Alternatively to generating a broad wavelength spectrum and filtering to select one or more wavelengths of choice, radiation sources could be provided that directly generate the one or more wavelengths of choice. Both narrowband and broadband radiation sources may rely on the same concept of converting pump radiation at one or more pump wavelengths (e.g. from a pump radiation source) to one or more target wavelengths through non-linear optical processes (e.g. frequency doubling, frequency addition, etc).

To accommodate non-linear optical processes, high peak powers (e.g. above 10⁹ W/cm²) may be required. Such high peak powers may be reached for example using solid-state laser systems or fiber-based laser systems as a pump radiation source. Pulsed solid-state laser systems may deliver peak intensity suitable for non-linear processes directly from their output. Other techniques may start from a continuous wave CW laser (e.g. solid-state-based or fiber-based) in combination with a resonant cavity for enhancing the peak power of the output radiation. This may be achieved by superposition of the radiation during multiple roundtrips in the cavity.

Currently known radiation sources for generating broadband radiation may be expensive and/or may be large in size, which may be unsuitable for some applications. Solid-state laser systems that facilitate high peak powers for non-linear optics may be complex and may take up a significant amount of space. This may be problematic in a metrology setup where available space is limited. Fiber-based lasers may also take up a large amount of space and may suffer from thermal issues when being driven at high powers. The current disclosure aims to provide an alternative broadband radiation source that may be smaller and cheaper than the supercontinuum radiation sources described above.

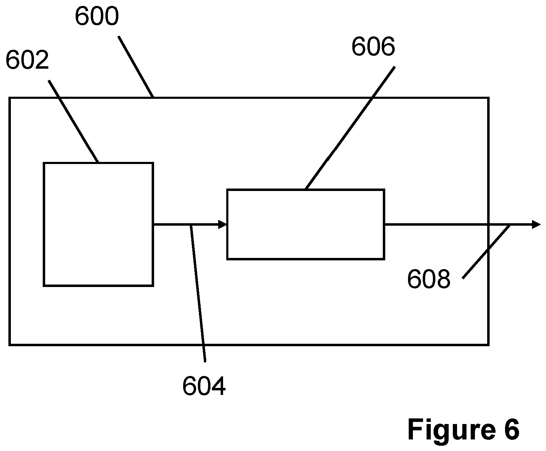

Figure 6 depicts a schematic representation of a radiation source 600 for generating broadband radiation 608. The radiation source 600 comprises a photonic crystal surface emitting laser PCSEL 602 that is configured to output radiation at a first wavelength 604. The radiation source further comprises a non-linear optical element 606 which is arranged to receive radiation 604 output by the PCSEL. The non-linear optical element 606 is configured to convert the first wavelength radiation 604 into broadband radiation 608 through non-linear effects.

An advantage of the radiation source described in relation to figure 6 above is that the combination of a PCSEL radiation source and a non-linear medium makes it possible to provide broadband radiation while having a compact size, low cost, and less complex design compared to other available broadband radiation sources. PCSELs may be compact, efficient, and may output high beam quality radiation. The PCSELs suitable for broadband generation described in the current disclosure may have a size that is at least a few mm in diameter. This is significantly smaller than solid state or fiber-based high-power lasers. Due to achieved optimizations of the photonic crystal design that supports the radiation generation of the PCSEL, the output radiation may have a high brightness (e.g. of 10⁹ W/cm²/sr or more).

A PCSEL may be integrated on a semiconductor substrate (e.g. a chip). A PCSEL may emit laser-like radiation, which may be coherent radiation. The radiation output by a PCSEL may be narrow linewidth radiation or single wavelength radiation. The PCSEL output radiation may be single mode radiation with narrow divergence. A PCSEL may have a size in the range of a few mm (millimeter).

The PCSEL may emit radiation continuously or may emit pulsed radiation. Such PCSELs may be referred to as a continuous wave CW PCSEL and a pulsed PCSEL, respectively. A pulsed PCSEL may be a nanosecond pulsed PCSEL or may be a picosecond pulsed PCSEL. A pulsed PCSEL may be a Q-switched PCSEL, or may be a gated CW (G-CW) PCSEL. A CW PCSEL may have a constant current applied to drive a constant emission of the PCSEL. The applied current may be above the lasing threshold of the PCSEL to achieve emission of radiation.

A gated CW PCSEL may have its driving current gated (periodically turned off/on or otherwise blocked/unblocked). The resulting emission of radiation may also be gated, wherein the duration of radiation emissions may match the duration of current applications. For example, applying a current above lasing threshold to a PCSEL for 10 ns may lead to that PCSEL emitting radiation for 10 ns. A G-CW PCSEL may be gated to be emit radiation periodically, in a pulsed manner. The peak power of the G-CW radiation beam may be the same as the total average power of the CW PCSEL with a constant applied current above lasing threshold. A gated CW PCSEL may be optically gated. In optical gating, an external light source may deliver radiation pulses that illuminate the PCSEL device. An optically gated PCSEL will only radiation when the external radiation pulses illuminate the PCSEL. A gated CW PCSEL may emit radiation pulses having a pulse length in a range of 1 ns to 50 ns.

A Q-switched PCSEL may emit pulses having a pulse length in a range of 10 ps to 1 ns. Due to the short pulse length of Q-switched PCSELs, the peak power of Q-switched PCSELs may be high, while the average power output may be low. Q-switching is a known technique that allows for the creation of high peak power pulsed output radiation beam. Known methods and assemblies for Q-switching may be used in combination with a PCSEL to achieve a Q-switched PCSEL.

In order to generate broadband radiation from a non-linear medium, the PCSEL may have a combination of pulse length, peak power, and pulse energy to initiate supercontinuum generation. The peak power and pulse energy of the radiation should be sufficiently high to achieve substantial non-linear effects. In pulsed radiation output by the PCSEL (either Q-switched or gated CW), a pulse may have a pulse energy of at least 1 µJ. In an example, a pulse output by a pulsed PCSEL may have a pulse energy in a range of 1 µJ to 50 µJ. However, examples with higher pulse energies are possible. A radiation pulse output by a PCSEL may have a peak power of at least 400W, e.g. in a range of 400 W to several thousands of Watts, e.g. 5000 W. Radiation output by the PCSEL may have a brightness of at least 1 GW/cm²/sr (gigawatt / centimetre squared / star radian). In some embodiments, the output from multiple PCSELs may be combined to increase peak and/or average power.

A PCSEL may be a gallium arsenide GaAs-based PCSEL (e.g. outputting at 940 nm, or in a range of 1040 nm - 1060 nm, or anywhere in a range of 630 nm to 1150 nm). A PCSEL may be a indium phosphide InP-based PCSEL (e.g. outputting in a range of 1300 nm - 1550 nm, or in a range of 1200 nm to 1700 nm).

In some embodiments, the PCSEL may be positioned in a cavity. The cavity may be a resonant cavity in which radiation may repeatedly reflect from cavity walls, which may lead to a build in intensity. The cavity may be configured to amplify the peak power of the first wavelength output from the PCSEL for providing to the non-linear optical element.

The non-linear optical element may comprise a non-linear medium configured to interact with radiation incident onto the non-linear optical element. In some instances, the non-linear optical element may be abbreviatedly referred to as a non-linear medium. The non-linear optical element may be a photonic crystal fiber. The photonic crystal fiber may be a hollow core fiber (HC-PCF). The hollow core fiber may have a zero-dispersion wavelength that is substantially matched to or near the first wavelength. Being near the first wavelength may be for example be within a range of 100 nm around the first wavelength. This may for example be in a range from 50 nm below to 50 nm above the first wavelength. The photonic crystal fiber may be a solid core photonic crystal fiber. The solid core of the fiber may be doped with a rare earth metal dopant. The rare earth metal dopant may for example comprise one or both of ytterbium Yb or erbium Eb. The non-linear optical element may comprise a non-linear crystal.

The peak power of radiation for initiating supercontinuum radiation in a photonic crystal fiber may be near or exceeding 400W. For example it may be more than 350W, more than 380W, or at least 400W. The peak power provided to the non-linear medium may meet or exceed the supercontinuum generation threshold. When the non-linear optical element is a photonic crystal fiber, the radiation provided to the fiber may be a single or near single TEM00 mode. This may be to enable efficient focussing and/or coupling into the fiber. A PCSEL provides an advantage that the output beam quality may already closely resemble this state without further beam manipulation. Therefore, it is considered that the PCSEL output radiation has a high radiation beam quality. This high beam quality may be a key advantage over other types of radiation sources suitable for broadband radiation generation. The photonic crystal fiber has a zero-dispersion wavelength that should match or be near the first wavelength of radiation output by the PCSEL, as described above, to enable efficient propagation of radiation through the fiber.

The first wavelength output by the PCSEL may be a single wavelength in a range of 800 nm to 1550 nm. The broadband radiation may be supercontinuum radiation. The broadband radiation may comprise a plurality of wavelengths in a range of 400 nm to 2000 nm, or in a range of 400 nm to 1050 nm, or in a range of 600 nm to 1050 nm.

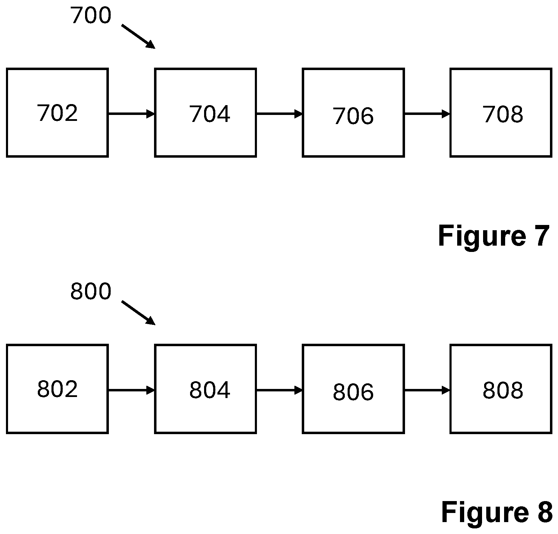

Figure 7 depicts a flowchart with steps in a process 700 for using a single PCSEL for broadband radiation generation. In step 702, a PCSEL provides pulsed output radiation (either from a pulsed PCSEL or a gated CW PCSEL). In step 704, pulses from the PCSEL are compressed for increasing their peak power. Standard pulse compression optical elements may be used to perform this step. In step 706, focussing optics may be provided to direct the radiation from the PCSEL to the non-linear medium. In step 708, the non-linear medium interacts with the high-intensity PCSEL radiation pulse to generate broadband radiation. As described below, steps 704 and 706 in this process are not essential for generating broadband radiation.

In an example embodiment, a PCSEL radiating at a wavelength of 943 nm may be capable of delivering an output power of 50 W in continuous wave operation, which may deliver a brightness of 1 GW/cm²/sr. This power delivery may be achieved by a PCSEL having a diameter in the range of a couple of mm, for example 3 mm. The power of such PCSEL may be enhanced significantly, for example by scaling up the area of the photonic crystal lattice. For example, scaling up the area from a 3 mm diameter to a 10 mm diameter may result in delivering 1000 W of peak power. Even at 10 mm, the size of the PCSEL is significantly smaller than fiber-based or solid-state based lasers. Due to the compact size of a PCSEL, a very small system may be provided that is able to convert the radiation output by the PCSEL to a non-linear frequency. As mentioned above, the beam quality and divergence of radiation directly output by a PCSEL is already of high quality, meaning little or no subsequent beam shaping optics may be needed to collimate the radiation output by the PCSEL.

To achieve high peak power needed for non-linear conversion from a PCSEL, a pulse output by a PCSEL may be compressed (spatially and/or temporally) to achieve a shorter pulse length. In some cases, a PCSEL (e.g. a Q-switched PCSEL) may emit radiation with a peak power high enough to not need subsequent pulse compression. Once the high peak power in a pulse from a PCSEL has been achieved, focusing optics or meta-materials may be used to guide or direct the radiation into a non-linear medium. In some cases, a PCSEL may be designed such that the output radiation is focused directly out of the PCSEL into the non-linear medium, in which case focusing optics are not required.

Alternatively or additionally to pulse compression and focusing optics as described above, high peak powers may be achieved by combining the output radiation from several PCSELs, for example in an array or in a grid. Figure 8 depicts a flowchart with steps in a process 800 for using a PCSEL array for broadband radiation generation. In step 802, a PCSEL array provides output radiation. In optional steps 804 and 806 pulse compression and focussing optics may be provided as described in relation to figure 7 above. In step 808 a resulting pulse with sufficient peak power is provided to a non-linear medium for broadband generation.

A grid or array of PCSELs may require the individual PCSELs to be coherent in their emission relative to each other, such that the peak power is linearly added. This may be required to scale the peak power to sufficient levels. Large arrays of coherently triggered PCSELs have been demonstrated (e.g. Taylor et al "Electronic Control of Coherence in a Two-Dimensional Array of Photonic Crystal Surface Emitting Lasers", 2015; Chang et al "A Simple Method to Build High Power PCSEL Array with Isolation Pattern Design", 2022; Gautam et al, "Laterally Coupled Photonic Crystal Surface Emitting Laser Arrays" 2024), such that each PCSEL is in phase and their power is scaled upon optical recombination.

It may be possible to use an array of PCSELs that does not require coherent emission. Although the power buildup may be less efficient compared to a coherent array, the resulting power available for the non-linear processes may still be increased relative to a single PCSEL. In an incoherent array of PCSELs, each PCSEL may be provided with slightly different properties, such as different wavelengths and/or beam shape. These differences may be used to manipulate or modify the non-linear wavelength broadening process. For example, it may be used to create larger generated bandwidth of broadband radiation and/or manipulate desired beam shapes. Pulse compression and/or focussing optics may also be used in combination with a PCSEL array, as described in relation to figure 7 above.

In an example embodiment, a CW PCSEL may be provided with a hollow core photonic crystal fiber for generating supercontinuum radiation. The PCSEL may deliver CW power through constant current application above the lasing threshold of the PCSEL. The CW radiation may be provided to the fiber. The radiation output by the PCSEL may have a brightness of at least 1 GW/cm²/sr. The radiation output by the PCSEL is a single TEM00 mode able to efficiently couple into the fiber. The wavelength of the radiation output by the PCSEL may be in a range of 800 nm to 1700 nm, for example 940 nm. The fiber may have a zero-dispersion wavelength that matches (or closely matches) the wavelength of the PCSEL. The average power may be 130W, and the fiber core size may be around 10 µm. These values are example values only and features described in relation to this example may apply to other values as well (e.g. difference wavelength, power).

Further described herein is a method for generating broadband radiation, comprising providing, by a PCSEL, radiation at a first wavelength. The method further comprises receiving, by a non-linear optical element, the first wavelength radiation from the PCSEL, and converting the first wavelength into broadband radiation through non-linear effects. The method may include and implement any of the features described in relation to the radiation source above.

Further embodiments are disclosed in the subsequent list of numbered clauses:
1. A radiation source for generating broadband radiation, comprising:
   a photonic crystal surface emitting laser PCSEL configured to output radiation at a first wavelength; and
   a non-linear optical element arranged to receive the radiation output by the PCSEL, and configured to convert the first wavelength radiation into broadband radiation through non-linear effects.
2. A radiation source according to clause 1, wherein the photonic crystal surface emitting laser PCSEL is a pulsed photonic crystal surface emitting laser PCSEL configured to output pulsed radiation at the first wavelength.
3. A radiation source according to clause 2, wherein pulses of the pulsed radiation have a pulse energy of at least 1 µJ.
4. A radiation source according to any of clauses 2-3, wherein pulses of the pulsed radiation have a peak power of at least 400 W.
5. A radiation source according to clause 1, wherein the photonic crystal surface emitting laser PCSEL is a continuous wave emission photonic crystal surface emitting laser PCSEL configured to output pulsed radiation through gated continuous wave pulsed operation.
6. A radiation source according to clause 5, wherein the continuous wave emission photonic crystal surface emitting laser PCSEL is optically gated to create pulsed radiation.
7. A radiation source according to clause 5 or 6, wherein pulses of the pulsed radiation of a gated continuous wave emission photonic crystal surface emitting laser PCSEL have a pulse length in a range of 1 ns - 50 ns.
8. A radiation source according to any of clauses 2-4, wherein the photonic crystal surface emitting laser PCSEL is a Q-switched PCSEL.
9. A radiation source according to clause 8, wherein pulses of the pulsed radiation of a Q-switched photonic crystal surface emitting laser PCSEL have a pulse length in a range of 10 ps -1 ns.
10. A radiation source according to any of the preceding clauses, wherein the output radiation from the photonic crystal surface emitting laser PCSEL has a brightness of at least 1GW/cm²/sr.
11. A radiation source according to any of the preceding clauses, wherein the photonic crystal surface emitting laser PCSEL is a GaAs-based PCSEL or an InP-based photonic crystal surface emitting laser PCSEL.
12. A radiation source according to any of the preceding clauses, wherein the photonic crystal surface emitting laser PCSEL is positioned in a cavity configured to amplify the peak power of the output radiation at the first wavelength.
13. A radiation source according to any of the preceding clauses, wherein the non-linear optical element comprises a photonic crystal fiber.
14. A radiation source according to clause 13, wherein the photonic crystal fiber is a hollow core fiber.
15. A radiation source according to any of clauses 13-14, wherein a zero-dispersion wavelength of the photonic crystal fiber falls within a range of 50nm above or below the first wavelength.
16. A radiation source according to clause 15, wherein the zero-dispersion wavelength of the photonic crystal fiber matches the first wavelength.
17. A radiation source according to clause 13, wherein the non-linear optical element comprises a solid core photonic crystal fiber, wherein the solid core of the photonic crystal fiber is doped with a rare earth metal dopant.
18. A radiation source according to clause 17, wherein the rare earth metal dopant comprises at least one of ytterbium Yb or erbium Er.
19. A radiation source according to any of the preceding clauses, wherein the first wavelength is a wavelength in a range of 800 nm - 1700 nm.
20. A radiation source according to any of the preceding clauses, wherein the broadband radiation is supercontinuum radiation.
21. A radiation source according to any of the preceding clauses, wherein the broadband radiation comprises a plurality of wavelengths in a range of 400 nm to 2000nm, or in a range of 400 nm to 1050 nm.
22. A metrology tool comprising a radiation source according to any of clauses 1-21.
23. An inspection tool comprising a radiation source according to any of clauses 1-21.
24. An exposure apparatus comprising a radiation source according to any of clauses 1-21.
25. A lithographic apparatus comprising a radiation source according to any of clauses 1-21.
26. A litho cell comprising a tool or apparatus according to any of clauses 22-25.

Although specific reference may be made in this text to the use of lithographic apparatus in the manufacture of ICs, it should be understood that the lithographic apparatus described herein may have other applications. Possible other applications include the manufacture of integrated optical systems, guidance and detection patterns for magnetic domain memories, flat-panel displays, liquid-crystal displays (LCDs), thin-film magnetic heads, etc.

Although specific reference may be made in this text to embodiments of the invention in the context of a lithographic apparatus, embodiments of the invention may be used in other apparatus. Embodiments of the invention may form part of a mask inspection apparatus, a metrology apparatus, or any apparatus that measures or processes an object such as a wafer (or other substrate) or mask (or other patterning device). These apparatus may be generally referred to as lithographic tools. Such a lithographic tool may use vacuum conditions or ambient (non-vacuum) conditions.

Although specific reference may have been made above to the use of embodiments of the invention in the context of optical lithography, it will be appreciated that the invention, where the context allows, is not limited to optical lithography and may be used in other applications, for example imprint lithography.

While specific embodiments of the invention have been described above, it will be appreciated that the invention may be practiced otherwise than as described. The descriptions above are intended to be illustrative, not limiting. Thus it will be apparent to one skilled in the art that modifications may be made to the invention as described without departing from the scope of the claims set out below.

Although specific reference is made to "metrology apparatus / tool / system" or "inspection apparatus / tool / system", these terms may refer to the same or similar types of tools, apparatuses or systems. E.g. the inspection or metrology apparatus that comprises an embodiment of the invention may be used to determine characteristics of structures on a substrate or on a wafer. E.g. the inspection apparatus or metrology apparatus that comprises an embodiment of the invention may be used to detect defects of a substrate or defects of structures on a substrate or on a wafer. In such an embodiment, a characteristic of interest of the structure on the substrate may relate to defects in the structure, the absence of a specific part of the structure, or the presence of an unwanted structure on the substrate or on the wafer.

## Claims

1. A radiation source for generating broadband radiation, comprising:
a photonic crystal surface emitting laser PCSEL configured to output radiation at a first wavelength; and
a non-linear optical element arranged to receive the radiation output by the PCSEL, and configured to convert the first wavelength radiation into broadband radiation through non-linear effects.

2. A radiation source according to claim 1, wherein the photonic crystal surface emitting laser PCSEL is a pulsed photonic crystal surface emitting laser PCSEL configured to output pulsed radiation at the first wavelength.

3. A radiation source according to claim 2, wherein pulses of the pulsed radiation have at least one of a pulse energy of at least 1 µJ and a peak power of at least 400 W.

4. A radiation source according to claim 1, wherein the photonic crystal surface emitting laser PCSEL is a continuous wave emission photonic crystal surface emitting laser PCSEL configured to output pulsed radiation through gated continuous wave pulsed operation.

5. A radiation source according to claim 4, wherein the continuous wave emission photonic crystal surface emitting laser PCSEL is optically gated to create pulsed radiation.

6. A radiation source according to claim 4 or 5, wherein pulses of the pulsed radiation of a gated continuous wave emission photonic crystal surface emitting laser PCSEL have a pulse length in a range of 1 ns - 50 ns.

7. A radiation source according to claim 2 or 3, wherein the photonic crystal surface emitting laser PCSEL is a Q-switched PCSEL.

8. A radiation source according to claim 7, wherein pulses of the pulsed radiation of a Q-switched photonic crystal surface emitting laser PCSEL have a pulse length in a range of 10 ps -1 ns.

9. A radiation source according to any of the preceding claims, wherein the output radiation from the photonic crystal surface emitting laser PCSEL has a brightness of at least 1GW/cm²/sr.

10. A radiation source according to any of the preceding claims, wherein the photonic crystal surface emitting laser PCSEL is a GaAs-based PCSEL or an InP-based photonic crystal surface emitting laser PCSEL.

11. A radiation source according to any of the preceding claims, wherein the photonic crystal surface emitting laser PCSEL is positioned in a cavity configured to amplify the peak power of the output radiation at the first wavelength.

12. A radiation source according to any of the preceding claims, wherein the non-linear optical element comprises a photonic crystal fiber.

13. A radiation source according to claim 12, wherein a zero-dispersion wavelength of the photonic crystal fiber falls within a range of 50nm above or below the first wavelength.

14. A radiation source according to claim 12, wherein the non-linear optical element comprises a solid core photonic crystal fiber, wherein the solid core of the photonic crystal fiber is doped with a rare earth metal dopant.

15. A metrology tool comprising a radiation source according to any of claims 1-14.
